# EUROPÄISCHE PATENTANMELDUNG

(11) **EP 2 979 894 A1**
(43) Veröffentlichungstag der Anmeldung: **03.02.2016**
(21) Anmeldenummer: 14002691.5
(22) Anmeldetag: 01.08.2014
(51) Int. Cl.: B44C 1/10, B32B 27/10

(54) **Dekorfolie**

(71) Anmelder: Hueck Folien Ges.m.b.H, 4342 Baumgartenberg (AT)
(72) Erfinder: Keplinger, Jürgen, A-4351 Saxen (AT)
(74) Vertreter: Landgraf, Elvira

(57) **Zusammenfassung**

Die Erfindung betrifft eine Dekorfolie für Möbelanwendungen, die folgenden Schichtaufbau umfasst:
f) eine Kunststofffolie aus PET
g) eine erste Kaschierkleberschicht
h) eine Schicht aus Papier
i) eine zweite Kaschierkleberschicht
j) ein Trägersubstrat.

## Beschreibung

Die Erfindung betrifft eine Dekorfolie, die für den Einsatz in der Möbelindustrie geeignet ist.

In der Möbelindustrie finden Dekorfolien breiten Einsatz. Die Dekorfolien werden auf das Basismaterial, im Allgemeinen auf Holz basierend, wie Spanplatten, MDF-Platten oder melaminbeschichtete Platten, aber auch auf Stahlbleche, Aluminium, Kunststoffkörper, in Form von Platten, Profilen, Leisten und dergleichen aufgebracht, um ein bestimmtes Erscheinungsbild zu erhalten.

Als Trägermaterial für die Dekorfolien dienen meist Kunststofffolien auf Basis von Polypropylen und Polyvinylchlorid, die für bestimmte Anwendungen mit optischen oder haptischen Folien auf PET-, PP-, PVC-Basis laminiert werden.

Bei der Applikation auf den Grundkörper unter Temperaturerhöhung kommt es aufgrund der unterschiedlichen thermischen Ausdehnungskoeffizienten der Folien eines derartigen Folienverbunds oft zu einer Delamination des Verbunds. Die Verwendung spezieller Kaschierkleber oder von Schmelzklebefolien kann diesen Nachteil nur bedingt verhindern.

Aufgabe der Erfindung war es eine Dekorfolie bereitzustellen, die für die Anwendung in der Möbelindustrie sowohl für ein-, zwei- und dreidimensionale Anwendungen geeignet ist, die Nachteile des Standes der Technik behebt und zwischen den Schichten eine hervorragende Haftfestigkeit aufweist.

Gegenstand der Erfindung ist daher eine Dekorfolie, die folgenden Schichtaufbau umfasst:
a) eine Kunststofffolie aus PET
b) eine Kaschierkleberschicht
c) eine Schicht aus Papier
d) eine Kaschierkleberschicht
e) ein Trägersubstrat.

Die Kunststofffolie a) aus PET weist eine Dicke von etwa 12 - 1000 µm, vorzugsweise etwa 50 - 150 µm auf.

Sie ist ein- oder beidseitig mit einer strahlungshärtbaren Lackbeschichtung versehen, die matt, glänzend, hochglänzend, gefärbt oder transparent sein kann. In einer besonderen Ausführungsform kann die strahlungshärtbare Lackbeschichtung partiell mattiert sein, beispielsweise durch Behandlung mit einem Excimer.

Ein geeignetes Verfahren zur partiellen Mattierung der Lackschicht ist beispielsweise in EP-A 2 418 019 offenbart.

Geeignet sind beispielsweise UV-Lacke auf Basis von modifizierten Acrylaten (Polyesteracrylate, Polyetheracrylate, PU-Acrylate).

Durch die UV-Lackbeschichtung weist die Dekorfolie hohe mechanische Beständigkeit, insbesondere hohe Kratzfestigkeit und Chemikalienbeständigkeit auf.

Ferner kann die Kunststofffolie funktionelle bzw. dekorative Schichten aufweisen. Sie kann beispielsweise auf der der Kaschierkleberseite zugewandten Oberfläche mit einer vollflächigen oder partiellen Druckschicht versehen sein, die beispielsweise durch Thermosublimationsdruck aufgebracht sein kann.

Als Druckfarben kommen beispielsweise Farben auf Basis von Polyvinylchlorid in Frage, die Pigmente, wie TiO₂, Ruß, metallische Pigmente und dergleichen oder Farbstoffe enthalten können.

Ferner kann die Kunststofffolie eine partielle oder vollflächige metallische Schicht aufweisen.

Als partielle oder vollflächige Metallisierung sind metallische Schichten beispielsweise aus Al, Cu, Fe, Ag, Au, Cr, Ni, Zn, Pt, Pd und dergleichen oder deren Legierungen, wie Cu-Al Legierungen, Cu-Zn Legierungen und dergleichen geeignet.

Die Kunststofffolie ist mit einer Papierlage, die beidseitig mit einer Kaschierklebeschicht beschichtet ist, verbunden. Besonders geeignet sind Kaschierklebeschichten auf Polyurethanbasis, allerdings können auch Kaschierkleber auf Basis von Acrylaten, Polyvinylchlorid, Ethylenacrylatcopolymeren oder Styrolacrylaten und dergleichen verwendet werden.

Die Papierlage besteht vorzugsweise aus Cellulose und kann das optische Erscheinungsbild der Dekorfolie bestimmen. Die Papierlage kann beispielsweise bedruckt sein, um ein bestimmtes Erscheinungsbild, beispielsweise in Form eines Dekors, wie ein Holzdekor, ein färbiges Dekor, eine Musterung und dergleichen, zu erhalten. Ferner kann die Papierlage zur Verbesserung der Opazität für farbige lackierte Dekorfolien in der gleichen Farbe oder andersfärbig ausgeführt sein.

Das Papier wird bereits bei der Papierherstellung imprägniert, beispielsweise mit Melaminharz, PVA, Styrol-acrylatcopolymeren oder dergleichen. Die Imprägnierung verbessert sowohl die physikalischen und chemischen Eigenschaften der Papierlage, als auch die Haftung zu den weiteren Schichten.

Die Papierlage weist üblicherweise eine Grammatur von 40 - 200g/m², vorzugsweise 60 bis 120 g/m² auf, besonders bevorzugt eine Grammatur von etwa 80 g/m².

Das Trägersubstrat besteht vorzugsweise aus einer Kunststofffolie aus Polypropylen, Polyvinylchlorid, PMMA, ABS, Polystyrol, Polycarbonat oder dergleichen.

Das Trägersubstrat weist vorzugsweise eine Dicke von 200 - 3000 µm besonders bevorzugt 300 - 1000 µm auf.

Im erfindungsgemäßen Folienverbund wirkt die zwischen den beiden Kunststofffolien eingebrachte Papierlage als Zwischenschicht und weist eine starke Haftung sowohl zum Trägersubstrat als auch zur Kunststofffolie aus PET auf.

Der Kaschierkleber, der beidseitig auf der Papierlage aufgebracht ist, durchdringt die Papierlage zumindest teilweise und sorgt für eine optimale Verklebung mit den beiden Kunststofffolien.

Gegebenenfalls während der Applikation unter Temperatureinwirkung auftretende Spannungen, die durch die unterschiedlichen Ausdehnungskoeffizienten der Kunststofffolie und des Trägersubstrats entstehen und die sich nachteilig auf die Verbundhaftung auswirken können, werden durch die mittlere Papierlage aufgenommen und ausgeglichen. Dadurch weist der Verbund hohe Verbundhaftwerte auf, eine Delamination wie bei derzeit bekannten Dekorfolien wird dadurch verhindert.

Insbesondere in der Fläche auftretende Kräfte werden durch die mittlere Papierlage effizient ausgeglichen.

Die erfindungsgemäße Dekorfolie weist im allgemeinen Verbundhaftwerte von > 20N/15 mm, gemessen nach folgendem Messaufbau, auf.

Aus der zu prüfenden Probe werden in Laufrichtung, ggf. auch quer zur Laufrichtung, 15 mm breite Streifen geschnitten (Länge ca. 10cm). Die Prüfstreifen werden an einem Ende im Verbund mechanisch (ohne Lösungsmittel) getrennt und mit der Hand soweit aufgezogen, dass sie in die Spannbacken der Zugprüfmaschine eingespannt werden können. Die Abzugsgeschwindigkeit beträgt 50 mm/min. Um einen Abzugswinkel von 90° zu erhalten, werden die Prüfstreifen auf einem Metallrad aufgespannt.

Der Verbundhaftwert ergibt sich aus dem Mittelwert der zur Trennung benötigten Kräfte.

Ferner weist die erfindungsgemäße Folie hohe Glanzwerte von 95 - 110 Glanzeinheiten, gemessen bei einem Messwinkel von 20° mittels Reflektometer nach DIN EN ISO 2813:2012-10, auf.

Zudem ist die erfindungsgemäße Dekorfolie durch die kratzfeste und chemikalienbeständige UV-Lackschicht auch für Anwendungen geeignet, die eine hohe Gebrauchsfrequenz aufweisen.

Die Chemikalienbeständigkeit wurde nach DIN 68861 "Möbeloberflächen - Teil 1: Verhalten bei chemischer Beanspruchung" ermittelt und ergab gegenüber den Prüfmitteln (24 verschiedene, u. a. Lebensmittel wie z.B. Senf, Butter und haushaltsübliche Chemikalien wie z.B. Essigsäure, Ammoniakwasser sowie Reinigungsmittel) die höchste Beanspruchungsgruppe (1A).

Die Kratzfestigkeit der erfindungsgemäßen Dekorfolie wurde nach DIN 68861 "Möbeloberflächen - Teil 4: Verhalten bei Kratzbeanspruchung" ermittelt und ergab die Beanspruchungsgruppe 4 B mit einer Gewichtskraft bis 4,0 N.

Die Abriebbeanspruchung wurde nach DIN 68861 "Möbeloberflächen - Teil 2: Verhalten bei Abriebbeanspruchung" ermittelt und ergab die höchste Beanspruchungsgruppe (2A) mit über 650 Umdrehungen.

Ferner ist der optische Eindruck der Dekorfolie einerseits durch die Gestaltung der Papierlage (Farbgebung, Dekor etc.) andererseits durch die Gestaltung der strahlungshärtbaren Lackschicht (matt, glänzend) und der Kunststofffolie aus PET (Farbe der Bedruckung, Dekor, Metallisierung) beeinflussbar.

Die erfindungsgemäße Dekorfolie ist daher sowohl für 1 D-Anwendungen (Flachkaschierung), 2D-Anwendungen (Ummantelungen), als auch für 3D-Anwendungen (Herstellung von Möbelelementen oder Zimmertüren mit Reliefstruktur) geeignet.

## Patentansprüche

1. Dekorfolie für Möbelanwendungen, die folgenden Schichtaufbau umfasst:
a) eine Kunststofffolie aus PET
b) eine erste Kaschierkleberschicht
c) eine Schicht aus Papier
d) eine zweite Kaschierkleberschicht
e) ein Trägersubstrat.

2. Dekorfolie nach Anspruch 1, **dadurch gekennzeichnet, dass** die Kunststofffolie a) aus PET eine Dicke von 12 - 1000 µm aufweist.

3. Dekorfolie nach einem der Ansprüche 1 oder 2, **dadurch gekennzeichnet, dass** die Kunststofffolie a) aus PET ein- oder beidseitig mit einer strahlungshärtbaren Lackbeschichtung versehen ist.

4. Dekorfolie nach einem der Ansprüche 1 bis 3, **dadurch gekennzeichnet, dass** die Kunststofffolie a) aus PET auf der der Kaschierklebeschicht zugewandten Oberfläche mit einer vollflächigen oder partiellen Bedruckung oder mit einer vollflächigen oder partiellen metallischen Schicht versehen ist.

5. Dekorfolie nach Anspruch 3 oder 4, **dadurch gekennzeichnet, dass** die UV-Lackbeschichtung matt, hochglänzend, gefärbt und/oder transparent ausgeführt ist.

6. Dekorfolie nach einem der Ansprüche 1 bis 5, **dadurch gekennzeichnet, dass** die Dekorfolie kratzfest und chemikalienbeständig ausgerüstet ist und einen Kratzfestigkeit der Beanspruchungsgruppe 4 B mit einer Gewichtskraft bis 4,0N nach DIN 68861 "Möbeloberflächen", Teil 4 und eine Chemikalienbeständigkeit der Beanspruchungsgruppe 1A nach DIN 68 861, Teil 1 aufweist.

7. Dekorfolie nach einem der Ansprüche 1 bis 6, **dadurch gekennzeichnet, dass** die erste und die zweite Kaschierkleberschicht auf Polyurethanbasis, auf Basis von Acrylaten, Polyvinylchlorid, Ethylenacrylatcopolymeren oder Styrolacrylaten aufgebaut sind.

8. Dekorfolie nach einem der Ansprüche 1 bis 7, **dadurch gekennzeichnet, dass** die Schicht aus Papier eine Grammatur von 40 bis 200 g/m² aufweist.

9. Dekorfolie nach einem der Ansprüche 1 bis 7, **dadurch gekennzeichnet, dass** das Papier mit Melaminharz, Polyvinylalkohol oder Styrolacrylatcopolymeren imprägniert ist.

10. Dekorfolie nach einem der Ansprüche 1 bis 8, **dadurch gekennzeichnet, dass** die Schicht aus Papier mit einer vollflächigen oder partiellen Bedruckung zur Herstellung eines Dekors versehen ist.

11. Dekorfolie nach einem der Ansprüche 1 bis 9, **dadurch gekennzeichnet, dass** das Trägersubstrat e) aus Polypropylen, Polyvinylchlorid, Polymetylmethacrylat, Acrylnitrilbutadienstyrol, Polystyrol, Polycarbonat besteht.

12. Dekorfolie nach einem der Ansprüche 1 bis 10, **dadurch gekennzeichnet, dass** sie einen Verbundhaftwert von > 20N/15mm aufweist.

13. Verwendung der Dekorfolie nach einem der Ansprüche 1 bis 11 für 1 D-Anwendungen wie Flachkaschierung, 2D-Anwendungen wie Ummantelungen und für 3D-Anwendungen wie Möbelelemente oder Zimmertüren mit Reliefstrukturen.
